# EUROPÄISCHE PATENTSCHRIFT

(11) **EP 0 871 271 B1**
(45) Veröffentlichungstag und Bekanntmachung des Hinweises auf die Patenterteilung: **02.07.2003**
(21) Anmeldenummer: 98201113.2
(22) Anmeldetag: 08.04.1998
(51) Int. Cl.: H02G 3/10

(54) **Montageelement für eine elektrische Anschlussdose**
Mounting element for an electrical connection box
Dispositif de montage pour une boîtier de connexion électrique

(30) Priorität: 11.04.1997 NL 1005801
(43) Veröffentlichungstag der Anmeldung: 14.10.1998
(73) Patentinhaber: B.V. Kunststoffenindustrie Attema, NL-4203 NN Gorinchem (NL)
(72) Erfinder: de Hoog, Antonie, 4213 DE Dalem (NL)
(74) Vertreter: Mertens, Hans Victor

(56) Entgegenhaltungen:
- EP-A- 0 753 920
- BE-A- 1 009 402
- DE-A- 4 216 994

## Beschreibung

Die Erfindung betrifft ein Montageelement zum Montieren einer elektrischen Anschlußdose auf einem Kabelkanal, wobei das Montageelement folgendes umfaßt: erste Befestigungsmittel zum Befestigen der Anschlußdose auf dem Montageelement; und zweite Befestigungsmittel zum Befestigen des Montageelements auf dem Kabelkanal. Die Erfindung betrifft gleichzeitig eine Anschlußdose zur Verwendung mit einem solchen Montageelement.

Derartige Montageelemente (z. B. aus BF-A-1 009 402) werden traditionell aus flächigem Metall hergestellt und dienen der Anbringung der elektrischen Anschlußdose über einem Kabelkanal mit U-förmigem Querschnitt sowie der Befestigung an einer der beiden aufrechten Seiten des Kabelkanals.

In der Praxis ist der zur Anbringung dieser Anschlußdosen über einem Kabelkanal zur Verfügung stehende Raum häufig sehr beschränkt und wird vor oder nach dem Anbringen völlig oder teilweise durch andere notwendige Einrichtungen belegt, wie beispielsweise einen anderen Kabelkanal oder einen Kanal einer Klimaanlage. Das Montageelement muß dann üblicherweise verbogen werden, um die Anschlußdose auf dem gewünschten Platz über dem Kabelkanal anbringen zu können, was einen verhältnismäßigen großen Kraftaufwand erfordert und darüber hinaus zur unkontrollierten Biegung des Montageelements führt.

Außerdem wird bei Aktivitäten am oder in der Nähe des Kabelkanal(s) eine bereits über diesem montierte Anschlußdose häufig durch Werkzeuge wie eine Leiter berührt, wodurch das Montageelement auf unerwünschte Weise verformt wird und die Anschlußdose sich nicht mehr in der ursprünglich gewünschten Position befindet.

Andere Nachteile des Montageelements aus Metall des Standes der Technik sind seine relativ hohen Kosten und die niedrige Korrosionsbeständigkeit.

Es ist Aufgabe der Erfindung ein verbessertes Montageelement bereitzustellen, das auf kontrollierte Weise verformt werden kann, aber andererseits seine Form behält, wenn darauf Kräfte vorübergehender Art ausgeübt werden.

Gleichzeitig ist es Aufgabe der Erfindung ein Montageelement bereitzustellen, das relativ preiswert und korrosionsbeständig ist.

Zur Erreichung der obengenannten Aufgaben ist das erfindungsgemäße Montageelement dadurch gekennzeichnet, daß es Federmittel umfaßt, die einen die ersten Befestigungsmittel aufweisenden ersten Teil des Montageelements von einer neutralen Stellung in zwei entgegengesetzte Richtungen scharnierbar und federnd mit einem die zweiten Befestigungsmittel umfassenden zweiten Teil des Montageelements verbinden. Wenn die Anschlußdose permanent in einer von der durch die neutrale Stellung des Montageelements definierten Stellung abweichenden Stellung montiert werden soll, kann das Montageelement aufgrund der Anwesenheit der Federmittel auf einfache und kontrollierte Weise verformt werden, welche Federmittel gleichzeitig dafür sorgen, daß die Verformung des Montageelements unmittelbar nach Lösen automatisch wieder aufgehoben wird. Wenn gegen eine über einem Kabelkanal mit Hilfe des erfindungsgemäßen Montageelements montierte Anschlußdose gestoßen wird, dreht sich die Anschlußdose weg und kehrt danach wieder in die durch die neutrale Stellung des Montageelements definierte Stellung zurück, ohne daß sich eine permanente Verformung einstellt.

Die Federmittel umfassen zweckmäßig einen geschwächten Bereich des Montageelements. Ein solcher geschwächter Bereich kann dadurch erhalten werden, daß die Materialdicke des Montageelements in diesem Bereich reduziert wird oder daß das Montageelement in diesem Bereich mit Löchern, Aussparungen oder dergleichen versehen wird. In allen diesen Fällen wird Material gespart.

In einer bevorzugten Ausführungsform unterscheidet sich der Kraftaufwand für die scharnierende Drehung des ersten Teils relativ zum zweiten Teil in der einen Richtung von dem in der entgegengesetzten Richtung. Dadurch wird erreicht, daß einerseits das Montageelement eine gute Fähigkeit aufweist, auf die Anschlußdose ausgeübte Stöße, die fast alle zu dem Kabelkanal gerichtet sind, aufzufangen - indem dafür gesorgt wird, daß die benötigte Scharnierkraft in diese Richtung relativ groß ist - und daß andererseits das Montageelement eine gute Fähigkeit aufweist, permanent in einer abweichenden Stellung außerhalb des Bereichs des Kabelkanals montiert zu werden, indem dafür gesorgt wird, daß die benötigte Scharnierkraft in der vom Kabelkanal abgewandten Richtung relativ klein ist. Die Federmittel umfassen dazu vorzugweise mindestens einen auf dem ersten oder zweiten Teil des Montageelements angebrachten flexiblen Vorsprung, der nur auf dem Kabelkanal abgestützt ist, wenn der erste Teil in eine Richtung aus der neutralen Stellung gegenüber dem zweiten Teil des Montageelements abgelenkt wird, oder der auf dem zweiten bzw. ersten Teil des Montageelements oder auf einem darauf angebrachten anderen Vorsprung gestützt ist.

In einer weiteren bevorzugten Ausführungsform umfassen die Federmittel ein flächiges gebogenes Teil, das um eine hauptsächlich quer zu der die Scharnierachse des Montageelements gerichtete Achse gebogen ist.

Wenn das Montageelement aus einem flexiblen Material, beispielsweise Kunststoff, hergestellt wird, kann es sowohl leicht als auch korrosionsbeständig und preiswert sein.

Die Erfindung wird im folgenden mit Bezug auf die beiliegende Zeichnung näher erläutert. In der Zeichnung zeigen:
Fig. 1a eine Vorderansicht eines erfindungsgemäßen Montageelements;
Fig. 1b eine Ansicht des Montageelements aus Fig. 1a von unten;
Fig. 1c einen Querschnitt durch das in Fig. 1a gezeigte Montageelement entlang der Linie Ic-Ic;
Fig. 1d eine Seitenansicht des Montageelement gemäß Fig. 1a, montiert auf einem Kabelkanal;
Fig. 1e und 1f Seiten- bzw. Vorderansichten eines Befestigungselements;
Fig. 2a eine Vorderansicht einer zweiten Ausführungsform eines erfindunggemäßen Montageelements;
Fig. 2b eine Ansicht des Montageelements aus Fig. 2a von unten;
Fig. 2c einen Querschnitt durch das in Fig. 2a gezeigte Montageelement entlang der Linie IIc-IIc;
Fig. 2d eine Seitenansicht des Montageelement gemäß Fig. 2a, montiert auf einem Kabelkanal;
Fig. 3a eine Draufsicht einer erfindungsgemäßen Anschlußdose;
Fig. 3b eine Seitenansicht, teilweise im Querschnitt, der Anschlußdose aus Fig. 3a;
Fig. 4a und 4b Vorder- bzw. Seitenansichten eines auf einem Kabelkanal montierten Montageelements mit einer auf dem Montageelement befestigten Anschlußdose;
Fig. 5 einen gegenüber Fig. 4a und 4b alternativen Aufbau;
Fig. 6a eine Vorderansicht eines anderen erfindungsgemäßen Montageelements; und
Fig. 6b eine Seitenansicht des Montageelements von Fig. 6a, montiert auf einem Kabelkanal.

In den verschiedenen Figuren beziehen sich gleiche Ziffern auf gleiche Komponenten oder auf Komponenten mit einer ähnlichen Funktion.

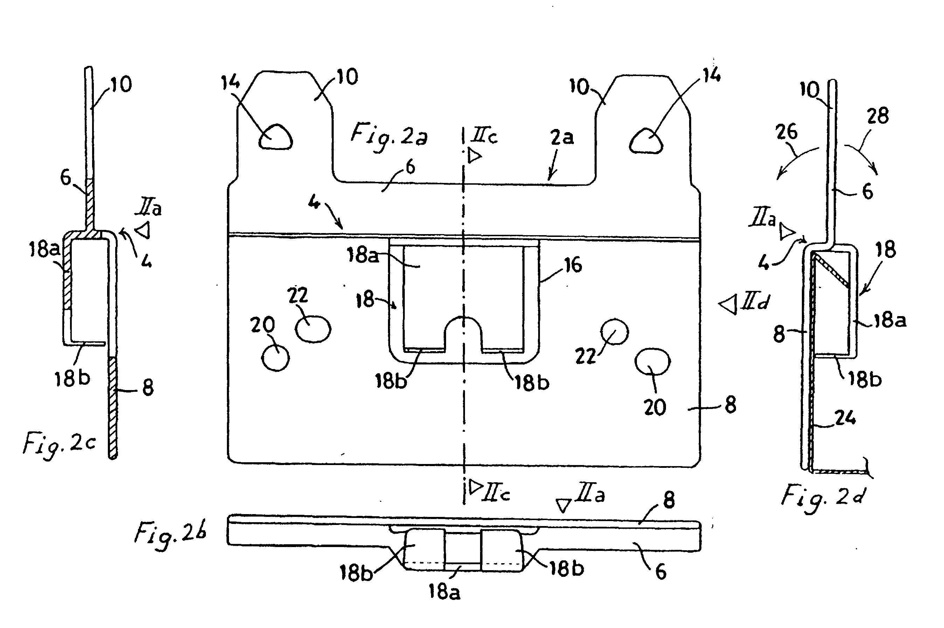

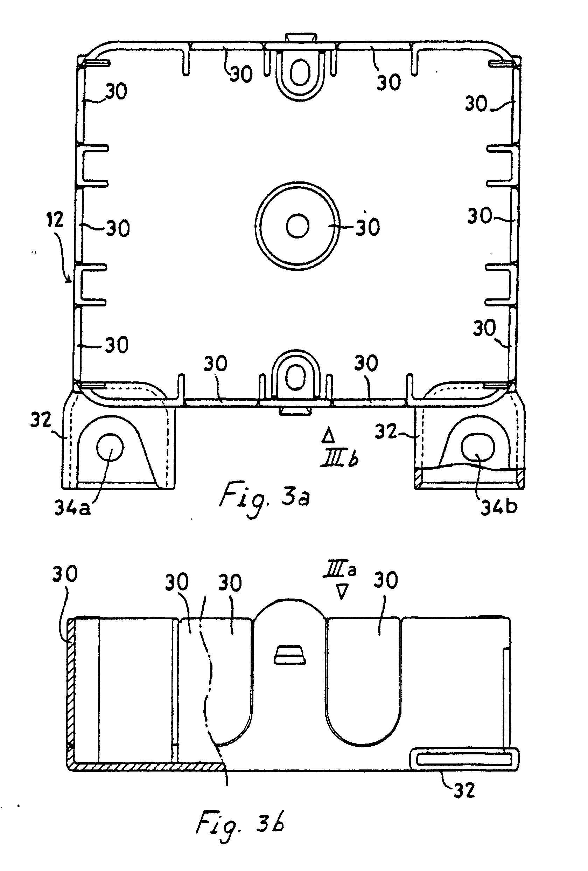

Fig. 1a-1d und 2a-2d zeigen verschiedene Ausführungsformen eines hauptsächlich Z-förmigen flächigen Montageelements 2a bzw. 2b aus flexiblem, elastischem Kunststoff. Die Montageelemente 2a bzw. 2b besitzen ein geschwächtes Teil 4, das einen im wesentlichen linienförmigen Übergangsbereich zwischen einem ersten Teil 6 und einem zweiten Teil 8 des Montageelements 2a bzw. 2b definiert. Der erste Teil 6 umfaßt zwei Lippen 10, die zur Verbindung mit Einrichtungen, die eine im wesentlichen komplementäre Gestalt aufweisen, einer Anschlußdose 12 vorgesehen sind, die im folgenden noch mit Bezug auf Fig. 3a und 3b näher besprochen wird. Jede Lippe 10 ist mit einem Loch 14 versehen, das im wesentlichen dreieckig ist und dessen eine Seite gerade ist, während die beiden anderen Seiten kreisbogenförmig sind.

Der zweite Teil 8 des Montageelements 2a bzw. 2b ist mit einem Fenster 16 versehen, in dem sich ein Vorsprung 18 mit L-förmigem Querschnitt angeordnet ist, mit einem Körperteil 18a und zwei sich quer dazu erstreckenden Füßen 18b. Der zweite Teil 8 ist ferner mit zwei Paar Löchern 20 und 22 versehen, wobei für optimale Montagefreiheit immer eines der Löcher jedes Paares kreisförmig und das andere oval ausgebildet ist.

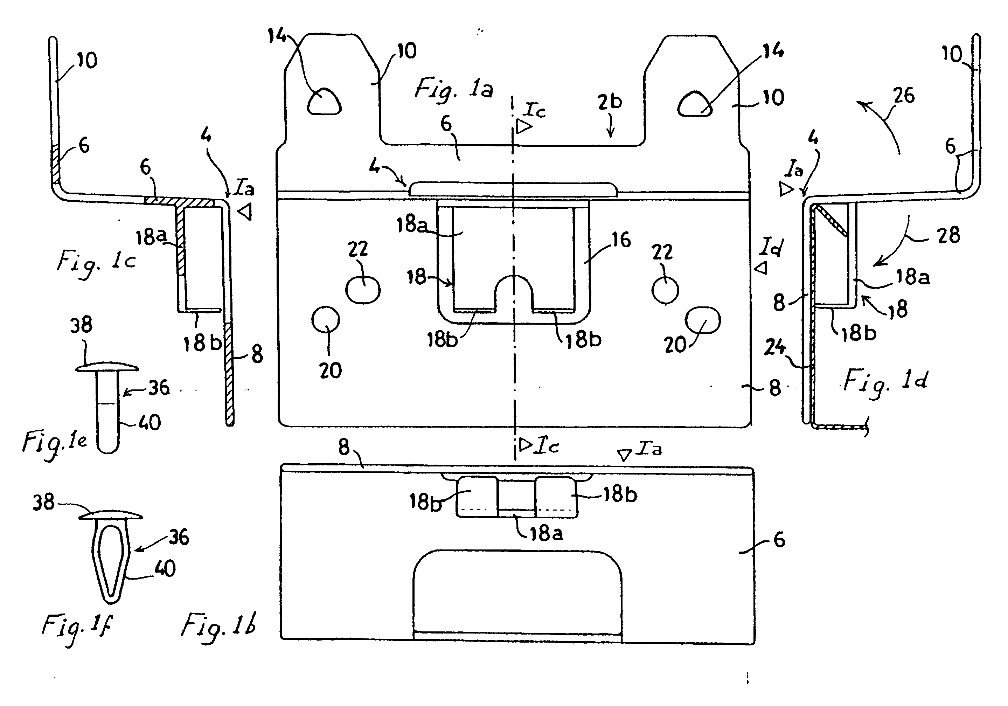

Wie in Fig. 1d und 2d gezeigt, kann das Montageelement 2a bzw. 2b auf einer aufrechten Seite eines im wesentlichen U-förmigen Kabelkanals 24 befestigt werden, wobei der zweite Teil 8 gegen die Außenseite des Kabelkanals 24 anliegt und der Vorsprung 18 mit den freien Enden der Füße 18b gegen die Innenseite der aufrechten Seiten des Kabelkanals 24 gestützt ist. Das Montageelement 2a bzw. 2b ist damit jedenfalls vorläufig klemmend auf dem Kabelkanal 24 angebracht, wonach eine permanente Befestigung beispielsweise durch Schraubverbindungen über die Löcher 20 und/oder 22 und entsprechende Löcher im Kabelkanal 24 erreicht werden kann. Der erste Teil 6 und die darauf an den Lippen 10 befestigte Anschlußdose 12 kann anschließend aufgrund der Schwachstelle 4 in die Pfeilrichtungen 26 oder 28 scharnieren, wenn eine entsprechende Kraft auf den ersten Teil 6 oder die Anschlußdose 12 ausgeübt wird. Wenn eine solche Kraft fehlt, nimmt der erste Teil 6 die in Fig. 1d oder 2d gezeigte Stellung ein. Durch die Anwesenheit des Vorsprungs 18 besitzen die die Schwachstelle 4 aufweisenden Federmittel des Montageelements 2a bzw. 2b verschiedene Federkonstanten in entgegengesetzten Richtungen 26 und 28: für die scharnierende Drehung des ersten Teils 6 in Richtung des Pfeils 26 ist weniger Kraft erforderlich als für die scharnierende Drehung des ersten Teils 6 in Richtung des Pfeils 28.

Fig. 3a zeigt eine elektrische Anschlußdose 12, bei der der dazugehörige Deckel fehlt. Die elektrische Anschlußdose 12 ist mit einer Anzahl von Brechöffnungen 30 versehen. Die Anschlußdose 12 ist an einer Seite in der Nähe des Bodens mit zwei Ohren 32 versehen, die ein kreisförmiges Loch 34a bzw. ein ovales Loch 34b aufweisen. Die Teilung der Löcher 34a, 34b entspricht der Teilung der Löcher 14 in den Lippen 10 des ersten Teils 6 des Montageelements 2a bzw. 2b. Die Ohren 32 umgreifen die Seitenkanten der Lippen 10.

Fig. 1e und 1f zeigen ein im wesentlichen pilzförmiges Befestigungselement 36 aus Kunststoff mit kreisförmigen Kopf 38 und rautenförmigem Stiel 40. Die Querabmessungen des breitesten Teils des in Fig. 1f gezeigten Stiels 40 können durch seitlichen Druck auf den Stiel 40 verringert werden. Das Befestigungselement 36 wird beispielsweise zur Befestigung der Anschlußdose 12 auf dem Montageelement 2a bzw. 2b benötigt, indem das Befestigungselement 36 durch die miteinander fluchtenden Löcher 14 und 34a bzw. 34b gedrückt und eventuell auch gedreht wird. Dieselben Befestigungselemente 36 können verwendet werden, um den zweiten Teil 8 des Montageelements 2a bzw. 2b auf dem Kabelkanal 24 festzumachen, indem das Befestigungselement 36 durch die miteinander fluchtenden Löcher 20 und/oder 22 und entsprechende Löcher des Kabelkanals 24 gedrückt und eventuell auch gedreht wird.

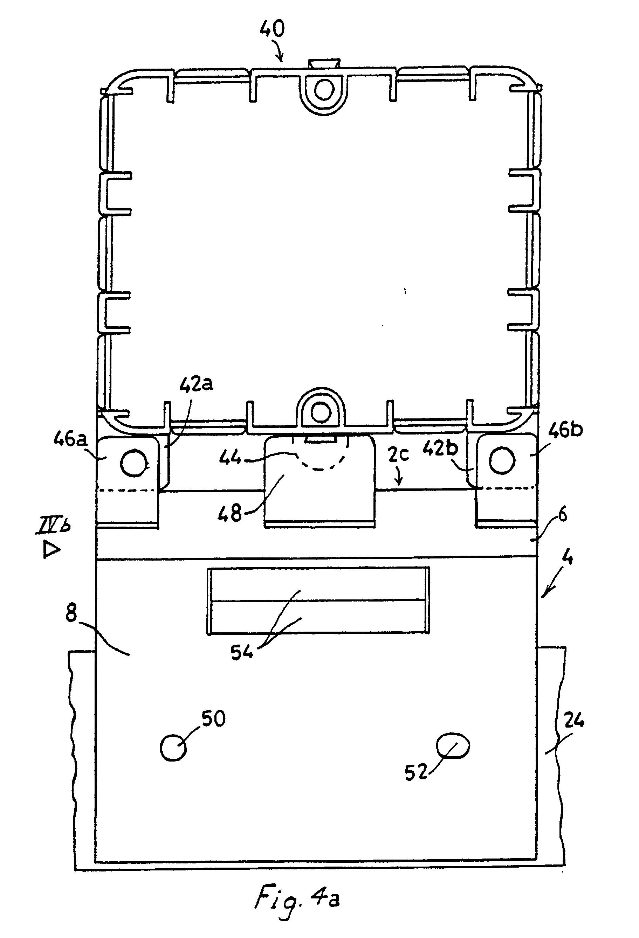

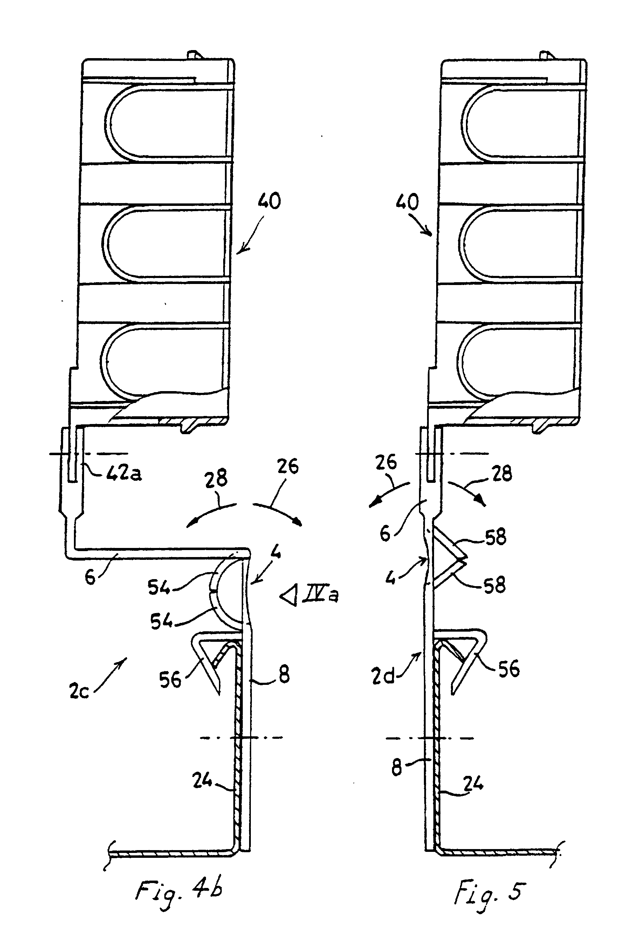

Fig. 4a und 4b zeigen eine Anschlußdose 40, die an einer Seite in Bodennähe mit drei Lippen 42a, 42b und 44 versehen ist. Der erste Teil 6 eines Montageelements 2c aus flexiblem, elastischem Kunststoff trägt drei gabelförmige Aufnahmelippen 46a, 46b und 48, die jeweils einen Spalt definieren, in dem die jeweiligen Lippen 42a, 42b und 44 aufgenommen werden können. Die Lippen 42a und 42b sind mit Löchern versehen, die mit den Löchern in den Aufnahmelippen 46a und 46b ausgerichtet werden können. Es ist somit möglich, eine Verbindung zwischen dem Montageelement 2c und der Anschlußdose 40 herzustellen, indem beispielsweise ein Befestigungselement 36 gemäß Fig. 1e und 1f durch die obengenannten Löcher gedrückt wird.

Der zweite Teil 8 des Montageelements 2c ist mit einem kreisförmigen Loch 50 und einem ovalen Loch 52 versehen, mit deren Hilfe beispielsweise unter Verwendung des Befestigungselements 36 eine Verbindung zwischen dem Montageelement 2c und dem mit entsprechenden Löchern versehenen Kabelkanal hergestellt werden kann.

Das Montageelement 2c besitzt einen geschwächten Bereich 4, in dessen Nähe zwei viertelkreisförmige Vorsprünge 54 mit den Enden aneinander liegen. Die Schwachstelle 4 bestimmt die Linie, entlang der der erste Teil 6 relativ zum zweiten Teil 8 des Montageelements 2c in einer der Pfeilrichtungen 26 und 28 scharnierend drehen kann. Die scharnierende Drehung in der Pfeilrichtung 26 wird dabei erheblich weniger Kraft erfordern als die scharnierende Drehung in der Pfeilrichtung 28, da die Vorsprünge 54 in der ersten Richtung auseinander bewegt werden, während die Enden der Vorsprünge 54 in der Richtung des Pfeils 28 gegeneinander gedrückt werden und somit einer scharnierenden Drehung entgegenwirken.

Das Montageelement 2c umfaßt schließlich noch ein Hakenelement 56, das um einen umgebogenen Rand des Kabelkanals 24 greift, wodurch eine vorläufige Befestigung schon unmittelbar nach Anbringung des Montageelements 2c erreicht wird.

Fig. 5 zeigt eine alternative Ausführungsform eines erfindungsgemäßem Montageelements aus Kunststoff. Das Montageelement 2d ist jetzt im wesentlichen einfach flächig und trägt in der Nähe des geschwächten Bereichs 4 flächige Vorsprünge 58, die sich bei der scharnierenden Drehung des ersten Teils 6 des Montageelements 2d relativ zum zweiten Teil 8 in Richtung des Pfeils 26 auseinander bewegen und einer scharnierenden Drehung in der entgegengesetzten Richtung 28 entgegenwirken, indem die Enden der Vorsprünge 58 sich dann aufeinander stützen.

Es ist deutlich, daß die Abmessungen und die Form der Vorsprünge innerhalb weiter Grenzen willkürlich gewählt werden können, um die gewünschten Scharniereigenschaften des Montageelements zu erreichen.

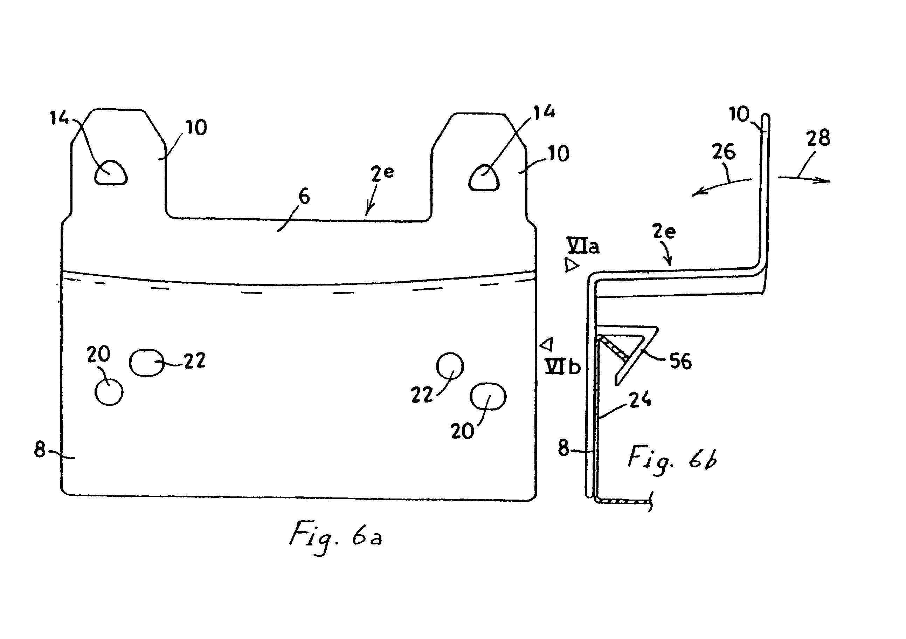

Fig. 6a und 6b zeigen ein Montageelement 21, bei dem zwischen dem ersten Teil 6 und dem zweiten Teil 8 ein flächiges gebogenes Teil 60 angebracht ist. Dadurch wird zur scharnierenden Drehung des ersten Teils 6 relativ zum zweiten Teil 8 in Richtung des Pfeils 26 weniger Kraft benötigt als in der entgegengesetzten Richtung 28.

Abschließend ist zu bemerken, daß das Montageelement im vorhergehenden Text als separates Bauteil beschrieben wurde. Das Montageelement kann jedoch auch integral mit der Anschlußdose geformt sein, wobei dann natürlich die ersten Befestigungsmittel für das Montageelement entfallen.

## Patentansprüche

1. Montageelement (2a; 2b; 2c; 2d; 2e) zum Montieren einer elektrischen Anschlußdose auf einem Kabelkanal (24), wobei das Montageelement folgendes umfaßt:
erste Befestigungsmittel zum Befestigen der Anschlußdose auf dem Montageelement; und
zweite Befestigungsmittel zum Befestigen des Montageelements auf dem Kabelkanal,
**dadurch gekennzeichnet, daß** das Montageelement (2a; 2b; 2c; 2d; 2e) Federmittel umfaßt, die ein die ersten Befestigungsmittel (14) aufweisendes erstes Teil (6) des Montageelements aus einer neutralen Stellung in zwei entgegengesetzte Richtungen (26, 28) scharnierbar und federnd mit einem die zweiten Befestigungsmittel (20, 22) umfassenden zweiten Teil (8) des Montageelements verbinden.

2. Montageelement nach Anspruch 1, **dadurch gekennzeichnet, daß** die Federmittel einen geschwächten Bereich (4) des Montageelements (2a; 2b; 2c; 2d) aufweisen.

3. Montageelement nach Anspruch 1 oder 2, **dadurch gekennzeichnet, daß** sich der erforderliche Kraftaufwand für die scharnierende Drehung des ersten Teils (6) relativ zum zweiten Teil (8) in der einen Richtung (26) von dem in der entgegengesetzten Richtung (28) unterscheidet.

4. Montageelement nach Anspruch 3, **dadurch gekennzeichnet, daß** die Federmittel mindestens einen auf dem ersten (6) oder zweiten (8) Teil des Montageelements (2a; 2b; 2c; 2d) angebrachten flexiblen Vorsprung (18) umfassen, der sich nur auf dem Kabelkanal (24) stützt, wenn der erste Teil (6) in eine Richtung (28) aus der neutralen Stellung gegenüber dem zweiten Teils (8) des Montageelements scharnierend gedreht wird.

5. Montageelement nach Anspruch 3, **dadurch gekennzeichnet, daß** die Federmittel mindestens einen auf dem ersten (6) oder zweiten (8) Teil des Montageelements (2a; 2b; 2c; 2d) angebrachten flexiblen Vorsprung (54; 58) umfassen, der sich nur auf den zweiten bzw. ersten (6) Teil des Montageelements oder auf einen darauf angebrachten zweiten Vorsprung (54; 58) stützt, wenn der erste Teil (6) in eine Richtung (28) aus der neutralen Stellung gegenüber dem zweiten Teils (8) des Montageelements scharnierend gedreht wird.

6. Montageelement nach Anspruch 3, **dadurch gekennzeichnet, daß** die Federmittel ein flächiges gebogenes Teil (60), das um eine hauptsächlich quer zu der Scharnierachse (2e) des Montageelements gerichtete Achse gebogen ist, umfassen.

7. Montageelement nach einem der vorhergehenden Ansprüche, **dadurch gekennzeichnet, daß** es aus einem flexiblen, elastischen Material besteht.

8. Montageelement nach Anspruch 7, **dadurch gekennzeichnet, daß** es aus Kunststoff besteht.

9. Anschlußdose mit Befestigungsmittel (32; 42a, 42b, 44) zum Befestigen der Anschlußdose (12; 40) auf dem Montageelement (2a; 2b; 2c; 2d; 2e) gemäß einem der vorhergehenden Ansprüchen.

10. Anschlußdose, die einen integralen Teil mit dem Montageelement (2a; 2b; 2c; 2d; 2e) gemäß einem der Ansprüche 1-8 bildet, wobei die ersten Befestigungsmittel des Montageelements entfallen.

## Claims

1. Mounting element (2a; 2b; 2c; 2d; 2e) for mounting an electrical connection box on a cable channel (24), the mounting element comprising the following:
first fixing means for fixing the connection box to the mounting element; and
second fixing means for fixing the mounting element on the cable channel,
**characterised in that** the mounting element (2a; 2b; 2c; 2d; 2e) comprises spring means which resiliently connect a first part (6) of the mounting element comprising the first fixing means (14) to a second part (8) of the mounting element comprising the second fixing means (20, 22) in hinged manner so as to move out of a neutral position in two opposite directions (26, 28).

2. Mounting element according to claim 1, **characterised in that** the spring means comprise an attenuated region (4) of the mounting element (2a; 2b; 2c; 2d).

3. Mounting element according to claim 1 or 2, **characterised in that** the amount of force that has to be applied for the articulated rotation of the first part (6) relative to the second part (8) in one direction (26) differs from that required in the opposite direction (28).

4. Mounting element according to claim 3, **characterised in that** the spring means comprise at least one flexible projection (18) mounted on the first (6) or second (8) part of the mounting element (2a; 2b; 2c; 2d) which rests only on the cable channel (24) when the first part (6) is rotated out of the neutral position in a direction (28) by articulation relative to the second part (8) of the mounting element.

5. Mounting element according to claim 3, **characterised in that** the spring means comprise at least one flexible projection (54; 58) mounted on the first (6) or second (8) part of the mounting element (2a; 2b; 2c; 2d) which rests only on the second or first (6) part of the mounting element or on a second projection (54; 58) provided thereon when the first part (6) is rotated out of the neutral position in a direction (28) by articulation relative to the second part (8) of the mounting element.

6. Mounting element according to claim 3, **characterised in that** the spring means comprise a flat bent portion (60) which is bent about an axis directed predominantly at right angles to the articulation axis (2e) of the mounting element.

7. Mounting element according to one of the preceding claims, **characterised in that** it consists of a flexible elastic material.

8. Mounting element according to claim 7, **characterised in that** it consists of plastics.

9. Connection box with fixing means (32; 42a, 42b, 44) for fixing the connection box (12; 40) to the mounting element (2a; 2b; 2c; 2d; 2e) according to one of the preceding claims.

10. Connection box which forms an integral component with the mounting element (2a; 2b; 2c; 2d; 2e) according to one of claims 1 to 8, dispensing with the first fixing means of the mounting element.

## Revendications

1. Elément de montage (2a ; 2b ; 2c ; 2d ; 2e) pour assembler un boîtier de connexion électrique à une conduite pour les câbles (24), de sorte que l'élément de montage comprend les éléments suivants :
des premiers moyens de fixation pour fixer le boîtier de connexion à l'élément de montage ; et
des deuxièmes moyens de fixation pour fixer l'élément de montage à la conduite pour les câbles,
**caractérisé en ce que** l'élément de montage (2a ; 2b ; 2c ; 2d ; 2e) comprend des moyens à ressorts qui relient une première partie (6) présentant les premiers moyens de fixation (14) de l'élément de montage à une deuxième partie (8) comprenant les deuxièmes moyens de fixation (20, 22) de l'élément de montage avec des charnières et des ressorts à partir dune position neutre dans deux directions opposées (26, 28).

2. Elément de montage selon la revendication 1, **caractérisé en ce que** les moyens à ressorts présentent une zone réduite (4) de l'élément de montage (2a ; 2b ; 2c ; 2d).

3. Elément de montage selon la revendication 1 ou 2, **caractérisé en ce que** la dépense d'énergie nécessaire pour la rotation autour des charnières de la première partie (6) par rapport à la deuxième partie (8) a lieu l'une dans une direction (26) et l'autre dans la direction opposée (28).

4. Elément de montage selon la revendication 3, **caractérisé en ce que** les moyens à ressorts comprennent au moins une partie saillante flexible (18) disposée sur la première (6) ou la deuxième (8) partie de l'élément de montage (2a ; 2b ; 2c ; 2d), partie qui appuie seulement sur la conduite pour les câbles (24), lorsque la première partie (6) est tournée autour des charnières dans une direction (28), à partir de la position neutre, par rapport à la deuxième partie (8) de l'élément de montage.

5. Elément de montage selon la revendication 3, **caractérisé en ce que** les moyens à ressort comprennent au moins une partie saillante (54 ; 58) flexible disposée sur la première (6) ou la deuxième (8) partie de l'élément de montage (2a ; 2b ; 2c ; 2d), partie qui appuie seulement sur la deuxième ou la première (6) partie de l'élément de montage ou sur une deuxième partie saillante (54 ; 58) disposée dessus, lorsque la première partie (6) est tournée autour des charnières dans une direction (28), à partir de la position neutre, par rapport à la deuxième partie (8) de l'élément de montage.

6. Elément de montage selon la revendication 3, **caractérisé en ce que** les moyens à ressorts comprennent une partie incurvée plane (60), laquelle est incurvée autour d'un axe orienté principalement transversalement par rapport à l'axe des charnières (2e) de l'élément de montage.

7. Elément de montage selon l'une quelconque des revendications précédentes, **caractérisé en ce qu'**il est composé d'un matériau élastique flexible.

8. Elément de montage selon la revendication 7, **caractérisé en ce qu'**il est composé de matière plastique.

9. Boîtier de connexion muni de moyens de fixation (32 ; 42a, 42b, 44) pour fixer le boîtier de connexion (12 ; 40) à l'élément de montage (2a ; 2b ; 2c ; 2d ; 2e) selon l'une quelconque des revendications précédentes.

10. Boîtier de connexion qui forme une partie intégrale avec l'élément de montage (2a ; 2b ; 2c ; 2d ; 2e) selon l'une quelconque des revendications 1 à 8, de sorte que les premiers moyens de fixation de l'élément de montage sont supprimés.
